# FASCICULE DE BREVET EUROPEEN

(11) **EP 1 614 563 B1**
(45) Date de publication et mention de la délivrance du brevet: **26.03.2008**
(21) Numéro de dépôt: 05105101.9
(22) Date de dépôt: 10.06.2005
(51) Int. Cl.: B60H 1/00, B62D 25/14

(54) **Poutre de renfort d'un habitacle de véhicule organisée pour la réception d'un module de distribution sélective d'air d'une installation de chauffage, de ventilation et/ou de climatisation**
Träger im Fahrzeuginnenraum für eine Luftversorgungseinrichtungeinheit einer Klima-Anlage.
Stiffening beam for the passenger compartment of a motor vehicle for supporting an air distribution box of a climate control installation.

(30) Priorité: 07.07.2004 FR 0407560
(43) Date de publication de la demande: 11.01.2006
(73) Titulaire: Valeo Systèmes Thermiques, 78321 Le Mesnil St Denis Cedex (FR)
(72) Inventeur: Droulez, Eric, 92150 Suresnes (FR); Pouysegur, Serge, 78610 Le Perray en Yvelines (FR); Truillet, Franck, 28410 Bu (FR)

(56) Documents cités:
- DE-A- 4 232 847
- FR-A- 2 813 824
- JP-A- 2001 246 922
- US-A- 5 934 744
- US-B1- 6 315 347

## Description

### Domaine technique de l'invention.

L'invention est du domaine des installations de chauffage, de ventilation et/ou de climatisation, pour habitacle de véhicule notamment. Elle a pour objet une poutre de renfort d'un habitacle de véhicule organisée pour permettre la circulation et la distribution sélective d'air en provenance d'une telle installation.

### Etat de la technique.

On connaît des installations de chauffage, de ventilation et/ou de climatisation pour habitacle de véhicule qui exploite la présence d'une poutre de renfort de l'habitacle pour véhiculer l'air distribué par l'installation. Ces poutres sont organisées soit pour loger des conduits en provenance de l'installation, soit de manière à constituer elles-mêmes des conduits de distribution d'air. On pourra par exemple se reporter aux documents, JP 2001246922 (UNIPRES CORP) W00168391 (MAGNA INTERIOR SYS INC), W009849024 (VOLVO PERSONVAGNAR AB), EP0989004 (DELPHI TECH INC), DE4239171 (DAIMLER BENZ AG) et FR2799413 (VALEO CLIMATISATION).

Le problème posé réside dans l'organisation générale de la poutre dont la résistance mécanique, qui constitue sa fonction première, ne doit pas être altérée par son agencement en organe de circulation et de distribution d'air. Il ressort d'une manière générale que ce compromis à trouver tend à diminuer les performances structurelles de la poutre, en raison de la présence d'ouvertures qui constituent des faiblesses mécaniques, de l'utilisation nécessaire en trop grande partie des matériaux peu résistants, matériaux plastiques notamment, ou encore en raison de modalités d'assemblage discontinus entre des éléments constitutifs de la poutre, qui créent des faiblesses structurelles.

En outre, de telles poutres sont agencées pour coopérer avec, voire loger des organes annexes de distribution sélective d'air, tels que des répartiteurs ou analogues, ce qui tend à accroître encore la complexité de leur organisation pour permettre le montage de ces organes annexes.

Il en ressort que la difficulté générale à surmonter réside dans un compromis à trouver entre une simplicité structurelle de la poutre, dont la structure doit de préférence offrir intrinsèquement les caractéristiques mécaniques recherchées pour le renfort de l'habitacle, une organisation de la poutre en organe susceptible de véhiculer sélectivement des flux d'air en provenance d'une installation de chauffage, de ventilation et/ou de climatisation, et la faculté de la poutre à offrir un montage aisé de divers organes de répartition et de distribution de l'air admis.

### Objet de l'invention.

Le but de la présente invention est de proposer une poutre de renfort d'un habitacle d'un véhicule constituant un organe véhiculant de manière sélective de l'air en provenance d'une installation de chauffage, de ventilation et/ou de climatisation, qui réponde au compromis susvisé.

La présente invention propose dans sa globalité d'organiser la poutre en un élément monobloc creux longitudinalement étendu suivant une direction constante comportant à ses extrémités des fenêtres qui offrent un passage d'introduction longitudinale d'organes de distribution sélective de l'air admis à l'intérieur de la poutre. Ces fenêtres sont ménagées aux bouts de la poutre pour orienter un tel passage d'introduction suivant l'axe général d'extension de la poutre, qui est constant entre ses extrémités. Ces dispositions sont telles que la poutre, étendue transversalement à l'habitacle du véhicule suivant une direction globale constante, est d'une structure simple et robuste en elle-même, qui offre intrinsèquement les caractéristiques mécaniques recherchées de résistance, tout en permettant le montage aisé par ses extrémités d'organes de distribution sélective d'air. Le corps est de préférence équipé à ses extrémités d'embouts de renfort et de fixation de la poutre à l'habitacle du véhicule.

On comprendra par structure monobloc du corps une structure dans laquelle le corps constitue un élément robuste de section normalement fermée, ce corps monobloc étant susceptible d'être composé de coquilles assemblées entre elles de manière rigide, voire et de préférence de manière irréversible par solidarisation pour lui conférer une robustesse idoine, par soudage notamment ou analogue.

Ce corps monobloc est préférentiellement composé d'au moins deux éléments longitudinaux solidarisés entre eux, par soudage ou analogue notamment. Pour conférer à ce corps une robustesse idoine, il est plus particulièrement proposé de solidariser ces éléments le long d'au moins 80 % de leur surface de contact l'un à l'autre.

Il est notamment visé par l'invention de permettre l'introduction longitudinale à l'intérieur de la poutre d'un module de distribution sélective d'air subdivisé en caissons longitudinaux cloisonnés respectivement droit et gauche. De tels caissons sont susceptibles d'être de section extérieure sensiblement correspondante à celle intérieure de la poutre. On comprendra que de tels caissons ménagent notamment divers conduits de circulation d'air à l'intérieur de la poutre, en étant équipés de répartiteurs ou volets pour diriger sélectivement l'air admis à l'intérieur de la poutre à travers au moins une bouche d'admission, vers diverses bouches d'évacuation correspondantes ménagées en correspondance à travers les parois de la poutre.

On notera que des organes de distribution sélective d'air, répartiteurs ou analogues notamment, sont quant à eux susceptibles d'être introduits à l'intérieur de la poutre à travers une bouche globale d'admission de l'air en provenance de l'installation, dont les dimensions sont suffisamment importantes pour être en correspondance avec les dimensions cumulées de diverses bouches d'évacuation que comporte la poutre, qui sont définies pour offrir des débits d'air respectifs satisfaisants selon les zones d'aération de l'habitacle qui leurs sont affectées.

A titre indicatif, une telle poutre d'une paroi d'épaisseur de l'ordre de 2 mm à 3,5 mm offre une première fréquence propre d'un minimum de 130 Hz, avec une résistance importante à la rupture, qui répondent aux exigences dans le domaine.

On notera que le matériau constitutif de la poutre est susceptible d'être indifféremment de l'acier, de l'aluminium ou un alliage, un matériau composite, voire un matériau stratifié.

De telles caractéristiques de la poutre offrent la possibilité de son installation dans le véhicule en ne la fixant que par ses extrémités, sans aucune pièce additionnelle de renfort, telle que du type béquille ou liaison avec le tablier.

Par ailleurs, la structure monobloc de la poutre renforcée à ses extrémités par les embouts permet de placer les différentes bouches que comporte la poutre avec des tolérances importantes de positionnement longitudinal et transversal, qui favorisent une adaptabilité confortable de la poutre pour un quelconque habitacle de véhicule, sans avoir à modifier l'organisation générale de sa structure.

Plus particulièrement, la poutre de la présente invention est une poutre creuse de renfort pour habitacle de véhicule. Cette poutre constitue en outre un organe à travers lequel circule de l'air en provenance d'une installation de chauffage, de ventilation et/ou de climatisation, et comporte à cet effet au moins une bouche d'admission d'air et une pluralité de bouches d'évacuation de l'air admis.

Selon la présente invention, une telle poutre est principalement reconnaissable en ce qu'elle est constituée d'un corps monobloc longitudinalement étendu suivant une direction constante. Ce corps comporte à ses extrémités des fenêtres pour l'introduction longitudinale d'organes de distribution sélective de l'air admis à l'intérieur de la poutre. Ce corps est en outre équipé d'embouts de renfort et de fixation de la poutre à l'habitacle du véhicule.

On notera que le corps monobloc est notamment composé d'au moins deux éléments longitudinaux solidarisés entre eux, par soudage notamment. Ce soudage est par exemple réalisé par faisceau laser, faisceau d'électrons ou par décharge de condensateur, ou autre procédé analogue.

Les embouts sont de préférence prolongés dans le sens longitudinal de la poutre en recouvrement des ouvertures de sortie d'air latérales, pour des raisons structurelles. Ces embouts présentent des ouvertures en regard des ouvertures latérales de sortie d'air de la poutre. Les embouts peuvent par exemple être organisés en colliers de serrage. Selon une forme préférée de réalisation, ces embouts sont chacun composés d'un couple d'équerres reliées l'une à l'autre à leurs bords libres, et comportent de préférence une platine de fermeture des extrémités de la poutre. Cette platine est avantageusement pourvue d'organes de centrage en bout de la poutre, et d'organes de fixation des embouts sur une structure porteuse de l'habitacle.

La poutre est notamment de section polygonale, rectangulaire notamment. On notera que cette section est susceptible de varier suivant la longueur de la poutre pour ménager des rétreints de passage d'organes du véhicule, tels qu'une colonne de direction et/ou un airbag.

Dans le cas où les embouts couvrent une zone de la poutre comportant une bouche, ceux-ci sont dotés d'au moins une fenêtre disposée en regard de cette bouche pour autoriser le passage de l'air.

### Description des figures.

La présente invention sera mieux comprise à la lecture de la description qui va en être faite d'une forme préférée de réalisation, en relation avec les figures des planches annexées, dans lesquelles :
La fig.1 est une illustration en perspective éclatée d'une poutre de renfort de la présente invention, environnée d'accessoires de distribution d'air qu'elle est destinée à loger.
La fig.2 est une illustration en perspective d'un embout que comporte la poutre représentée sur la fig.1.
La fig.3 est une illustration en perspective d'une poutre représentée sur la fig.1, sur laquelle sont visibles ses faces frontale et inférieure.
La fig.4 est une illustration en perspective d'une poutre représentée sur la fig.1, sur laquelle sont visibles ses faces frontale et supérieure.
La fig.5 est une illustration en perspective d'une poutre représentée sur la fig.1, sur laquelle sont visibles ses faces arrière et supérieure.

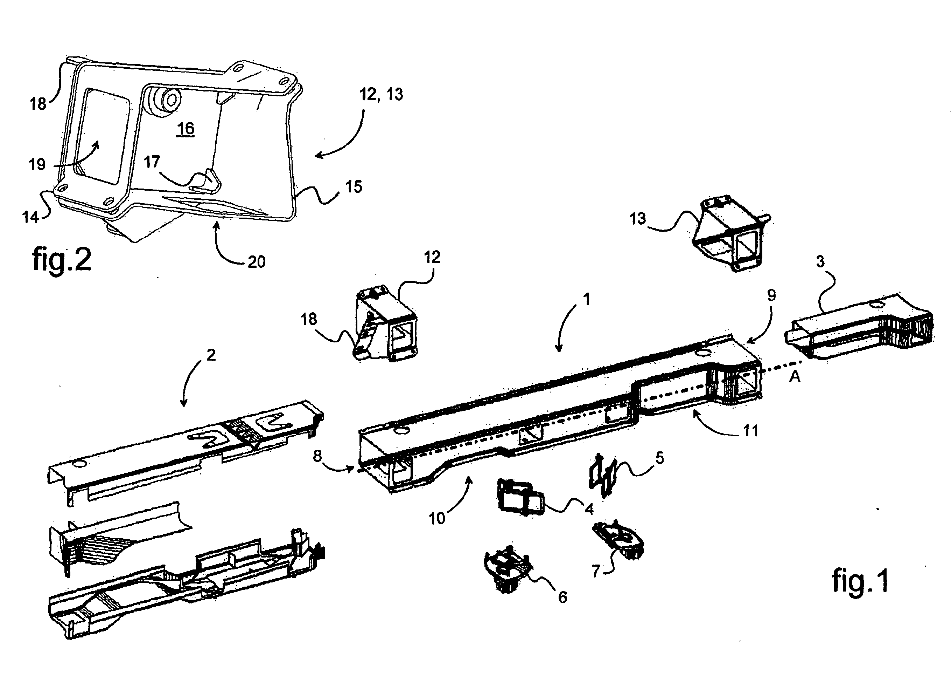

Sur la fig.1, une poutre 1 de renfort d'un habitacle de véhicule est organisée pour la circulation à son travers de l'air en provenance d'une installation de chauffage, de ventilation et/ou de climatisation du véhicule. Plus particulièrement, cette poutre 1 est aménagée pour loger au moins un caisson 2,3 formant un module de distribution sélective d'air, voire des répartiteurs 4,5, tels que des volets ou analogues qu'elle reçoit par l'intermédiaire de platines de liaison 6,7. Cette poutre 1 est longitudinalement étendue suivant une direction constante et est ouverte à ses extrémités pour ménager des fenêtres 8,9 à travers lesquelles sont introduits les caissons 2,3 pour leur montage à l'intérieur de la poutre 1.

On relèvera que l'orientation de ces fenêtres 8,9 par rapport à l'axe A général d'extension de la poutre 1 est telle qu'elle permet le passage des caissons 2,3 à travers les fenêtres 8,9 suivant cet axe A d'extension de la poutre 1. On notera aussi que l'introduction des caissons 2,3 par les extrémités de la poutre 1 est rendue possible pour des caissons 2,3 qui sont longitudinalement étendus de manière conséquente, grâce à la constance de l'extension de la poutre 1 entre ses extrémités. Sur l'exemple préféré de réalisation illustrée, la section de la poutre 1 est globalement rectangulaire. On comprendra que la section de la poutre 1 est susceptible de varier, tant en conformation qu'en dimension sans pour autant induire une variation de sa direction générale d'extension, notamment pour former des rétreints 10,11 de passage d'une colonne de direction du véhicule ou d'un airbag.

En se reportant par ailleurs sur la fig.2, les extrémités de la poutre 1 sont équipées d'embouts 12,13 de renfort et de fixation de la poutre 1 sur une structure porteuse de l'habitacle du véhicule, et notamment sur des montants que ce dernier comporte. Ces embouts 12,13 sont chacun globalement conformés en un couple d'équerres 14,15 reliées l'une à l'autre par leurs bords libres. Une platine 16 de fermeture des extrémités de la poutre 1 est disposée en bout des équerres 14,15 de chacun des embouts 12,13, et comporte des organes de centrage 17 sur les faces extérieures de la poutre 1. Une aile 18 de fixation des embouts 12,13 sur la structure porteuse de l'habitacle est ménagée à la face arrière de cette platine 16.

Les équerres 14,15 composant les embouts 12,13 étant susceptibles de recouvrir des bouches 23,24 que comporte la poutre 1, des fenêtres 19,20 sont ménagées dans les embouts 12,13 de manière à être disposées en regard sur ces bouches 23,24 pour autoriser le passage de l'air hors de la poutre 1.

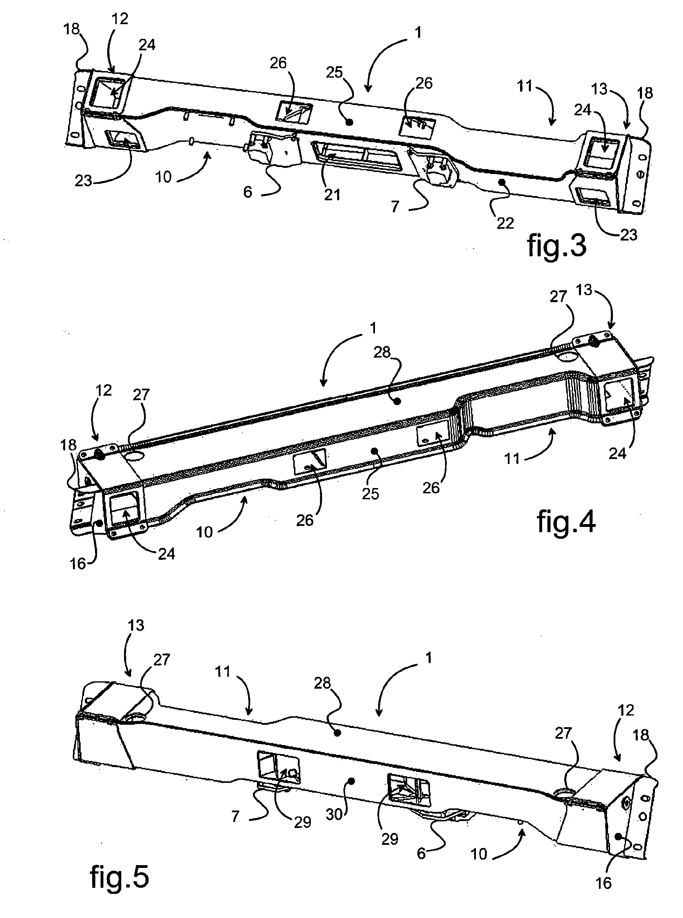

Sur les fig.3 à fig.5, la poutre 1 comporte à ses faces diverses bouches. On notera que l'architecture de la poutre 1 proposée par l'invention permet de positionner relativement librement ces bouches le long des faces de la poutre, pour adapter cette dernière à un quelconque véhicule sans pour autant ni modifier considérablement sa structure, ni porter atteinte à ses qualités intrinsèques de résistance mécanique recherchées.

Sur la fig.3, une bouche 21 d'admission d'air est ménagée sensiblement en zone médiane de la face inférieure 22 de la poutre 1. Cette bouche 21 d'admission d'air est à titre indicatif d'une dimension présentant une superficie comprise entre 1,2 dm2 et 2,2 dm2. On notera qu'une telle superficie est à estimer au regard des valeurs courantes dans le domaine pour des débits d'air de l'ordre de 500kg/h à 700kg/h. Une telle dimension est susceptible d'être mise à profit pour l'introduction d'au moins un répartiteur 4,5 après introduction des caissons 2,3 composant le module de distribution d'air notamment. On notera à ce stade de la description que la superficie de bouches d'évacuation d'air que comporte la poutre, prises individuellement, est comprise entre 0,17 fois et 0,15 fois la superficie de la bouche 21 d'admission d'air. La poutre est caractérisée en ce que la superficie des bouches 23, 24, 26 d'évacuation d'air, prises individuellement, est comprise entre 0,17 fois et 0,25 fois la superficie de la bouche 21 d'admission d'air.

Des bouches 23 d'évacuation pour l'aération arrière respectivement droite et gauche sont ménagées aux extrémités correspondantes de la face inférieure 22 de la poutre 1.

En se reportant par ailleurs sur la fig.4, des bouches 24 d'évacuation pour l'aération latérale respectivement droite et gauche sont ménagées aux extrémités correspondantes de la face frontale 25 de la poutre 1.
Des bouches 26 d'évacuation pour l'aération centrale sont ménagées en zone médiane de la face frontale 25 de la poutre 1.

En se reportant par ailleurs sur la fig.5, des bouches 27 d'évacuation pour le désembuage respectivement droite et gauche sont ménagées aux extrémités correspondantes de la face supérieure 28 de la poutre 1. Ces bouches 27 sont chacune d'une superficie comprise entre 0,05 et 0,2 fois la superficie cumulée des bouches 27,29 d'évacuation d'air pour le dégivrage et/ou la diffusion douce 29 et pour le désembuage 27.
Des bouches 29 d'évacuation pour le dégivrage et/ou la diffusion douce sont ménagées en zone médiane de la face arrière 30 de la poutre 1. Ces bouches 29 sont d'une superficie cumulée de l'ordre comprise entre 0,8 et 0,95 fois la superficie cumulée des bouches 27,29 d'évacuation d'air pour le dégivrage et/ou la diffusion douce (29) et pour le désembuage (27).

On relèvera que selon une forme de réalisation préférée et à titre indicatif, la poutre 1 présente une section extérieure de l'ordre de 1,81 dm2 et une section intérieure maximale de l'ordre de 1,64 dm2, pour une épaisseur de ses faces de l'ordre de 3 mm. Dans le cas où la poutre 1 ne distribue de l'air que pour l'aération avant, la section intérieure minimale de cette dernière est de l'ordre de 1 dm2.

La superficie cumulée des bouches 23,24,26,27,29 d'évacuation d'air est de l'ordre de 6,3 dm2 pour respectivement une répartition de ces surfaces de l'ordre de 0,962 dm2 pour les bouches 23 d'aération arrière, de l'ordre de 0,956 dm2 pour les bouches 24 d'aération latérales, de l'ordre de 0,814 dm2 pour les bouches 26 d'aération centrale, de l'ordre de 0,318 dm2 pour les bouches 27 de désembuage, et de l'ordre de 1,438 dm2 pour les bouches 29 de dégivrage et/ou la diffusion douce.

Par ailleurs, la superficie cumulée des bouches ménagées dans les faces de la poutre par rapport à la superficie globale de ces bouches, est de l'ordre de 44% pour la face inférieure de la poutre, de l'ordre de 28% pour la face frontale, de l'ordre de 5% pour la face supérieure et de l'ordre de 23% pour la face arrière.

La section interne de la poutre 1 au droit des rétreints 10,11 est notamment comprise entre 0,25 fois et 0,7 fois la superficie de la bouche d'admission d'air. Plus précisément, dans le cas de la présence d'une bouche d'aération latérale 24 seule, la section de la poutre 1 au droit du rétreint 10,11 est de l'ordre de 0,25 fois la superficie de la bouche d'admission d'air 21, tandis que dans le cas où à cette bouche d'aération latérale 24 est adjoint d'autres bouches d'évacuation, telles que d'aération arrière 23 et de désembuage latéral 27, cette section de la poutre 1 est de l'ordre de 0,7 fois la superficie de la bouche d'admission d'air. On comprendra que ces dimensions de section de poutre sont données à titre indicatif, et doivent le cas échéant prendre en compte l'encombrement d'un caisson de distribution d'air ou analogue disposé à l'intérieur de la poutre.

la somme des superficies des bouches 27,29 d'évacuation pour le désembuage et le dégivrage est comprise entre 0,7 dm2 et 1,6 dm2. On comprendra que ces dimensions sont à prendre en compte au regard d'un débit d'air habituel dans le domaine de l'ordre de 320 kg/h à 500 kg/h.

Sur l'exemple de réalisation illustré, le module de distribution sélective d'air est composé de deux caissons 2 et 3. Un premier caisson est lui-même composé de trois éléments 31, 32, 33, dont deux éléments longitudinaux 31 et 32 et un élément de cloisonnement intérieur 33. Un deuxième caisson 3 est quant à lui constitué d'un élément monobloc. Le procédé d'assemblage de la poutre avec les organes de distribution sélective d'air consiste notamment à effectuer les étapes successives suivantes :
-) solidariser l'un à l'autre, par soudage notamment, les éléments constitutifs de la poutre 1, pour former le corps monobloc.
-) Introduire le ou les organes de distribution sélective d'air 2,3 longitudinalement à l'intérieure de la poutre 1, travers les fenêtres 8,9 d'extrémités respectives qui y sont ménagées.
-) Fixer à la poutre 1, par vissage notamment, les organes de distribution sélective d'air 2,3. Le cas échéant, cette opération est en outre mise à profit pour assembler entre eux des éléments constitutifs des organes de distribution sélective d'air, tels que les éléments 31,32,33 composant le caisson 2.
-) Introduire et fixer le ou les répartiteurs 4,5 à l'intérieur de la poutre à travers la bouche d'admission 21. On notera que ces répartiteurs sont susceptibles de comprendre des répartiteurs affectés et fixés aux caissons (non représentés) et des répartiteurs affectés à la bouche d'admission d'air 21 et fixés directement sur la poutre 1, par l'intermédiaire des platines de liaison 6,7 notamment.

Plus particulièrement sur l'exemple de réalisation illustré, le procédé d'assemblage d'une poutre de la présente invention, avec des organes de distribution sélective d'air tels qu'illustrés, comprend les étapes successives consistant à :
-) introduire longitudinalement un premier élément longitudinal 31 du caisson à l'intérieur de la poutre à travers son extrémité correspondante. On notera que cet élément 31 est celui comportant le cas échéant un rétreint de passage d'un organe du véhicule, colonne de direction notamment.
-) Enfiler par glissement le deuxième élément longitudinal 32 sur le premier élément 31, pour son introduction à l'intérieur de la poutre.
-) Placer l'élément de cloisonnement 33 en bout des éléments longitudinaux 31 et 32.
-) Fixer depuis l'extérieur de la poutre 1, par vissage notamment ou analogue, les éléments longitudinaux 31,32 à travers des orifices que comporte la poutre 1, pour assembler ces éléments longitudinaux 31,32 entre eux et pour les solidariser à la poutre 1, tout en réalisant l'étanchéité entre ces différents éléments 21,32 assemblés.
-) Introduire et fixer le deuxième caisson à l'intérieur de la poutre, à partir de son extrémité opposée à la précédente.
-) Le cas échéant, introduire et fixer des répartiteurs à l'intérieur de l'un au moins des caissons, à travers la bouche d'admission 21.
-) Introduire des répartiteurs médians 4,5 à l'intérieur de la poutre 1, à travers la bouche d'admission 21. On notera que ces répartiteurs médians 4,5 sont avantageusement fixés à la poutre par l'intermédiaire des platines de liaison 6 et 7.

## Revendications

1. Poutre creuse (1) de renfort de l'habitacle de véhicule, cette poutre (1) constituant un organe à travers lequel circule de l'air en provenance d'une installation de chauffage, de ventilation et/ou de climatisation, et comportant à cet effet au moins une bouche (21) d'admission d'air et une pluralité de bouches (23,24,26,27,29) d'évacuation de l'air admis, et étant constituée d'un corps monobloc longitudinalement étendu suivant une direction constante, et qui est équipé à ses extrémités d'embouts (12,13) de renfort et de fixation de la poutre (1) à l'habitacle du véhicule, **caractérisé en ce qu'**il comporte à ses extrémités des fenêtres (8,9) pour l'introduction longitudinale d'organes de distribution sélective de l'air admis à l'intérieur de la poutre (1).

2. Poutre selon la revendication 1, **caractérisée en ce que** le corps monobloc est composé d'au moins deux éléments longitudinaux solidarisés entre eux.

3. Poutre selon la revendication 2, **caractérisée en ce que** les éléments composant le corps sont solidarisés l'un à l'autre le long d'au moins 80 % de leur surface de contact.

4. Poutre selon l'une quelconque des revendications 2 et 3, **caractérisée en ce que** les éléments composant le corps sont solidarisés par soudage.

5. Poutre selon l'une quelconque des revendications précédentes, **caractérisée en ce que** des organes de distribution sélective d'air sont introduits à l'intérieur de la poutre à travers une bouche globale d'admission de l'air en provenance de l'installation.

6. Poutre selon l'une quelconque des revendications précédentes, **caractérisée en ce que** les embouts (12,13) sont organisés en colliers de serrage.

7. Poutre selon l'une quelconque des revendications précédentes, **caractérisée en ce qu**e les embouts (12,13) couvrant une zone de la poutre (1) comportant une bouche (23,24), ceux-ci sont dotés d'au moins une fenêtre (19,20) disposée en regard de cette bouche (23,24) pour autoriser le passage de l'air.

8. Poutre selon l'une quelconque des revendications 6 et 7, **caractérisée en ce que** les embouts (12,13) sont chacun composés d'un couple d'équerres (14,15) reliées l'une à l'autre à leurs bords libres.

9. Poutre selon l'une quelconque des revendications précédentes, **caractérisée en ce que** les embouts (12,13) comportent une platine (16) de fermeture des extrémités de la poutre (1), pourvue d'organes de centrage (17) sur cette dernière (1) et d'organes (18) de fixation des embouts (12,13) sur une structure porteuse de l'habitacle.

10. Poutre selon l'une quelconque des revendications précédentes, **caractérisée en ce qu'**elle est de section polygonale.

11. Poutre selon l'une quelconque des revendications précédentes, **caractérisée en ce qu**'elle est de section variable suivant sa longueur pour ménager des rétreints (10,11) de passage d'organes du véhicule.

12. Poutre selon l'une quelconque des revendications précédentes, **caractérisée en ce que** la bouche (21) d'admission d'air est d'une dimension présentant une superficie comprise entre 1,2 dm2 et 2,2 dm2.

13. Poutre selon l'une quelconque des revendications précédentes, **caractérisée en ce que** la bouche (21) d'admission d'air est ménagée en zone médiane de la face inférieure (22) de la poutre (1).

14. Poutre selon l'une quelconque des revendications précédentes, **caractérisée en ce que** la superficie des bouches (23,24,26) d'évacuation d'air, prises individuellement, est comprise entre 0,17 fois et 0,25 fois la superficie de la bouche (21) d'admission d'air.

15. Poutre selon la revendication 11, **caractérisée en ce que** la section interne de la poutre (1) au droit des rétreints (10,11) est comprise entre 0,25 fois et 0,7 fois la superficie de la bouche d'admission d'air.

16. Poutre selon la revendication 14, **caractérisée en ce que** la somme des superficies des bouches (27,29) d'évacuation pour le désembuage et le dégivrage est comprise entre 0,7 dm2 et 1,6 dm2.

17. Poutre selon la revendication 16, **caractérisée en ce que** des bouches (27) d'évacuation pour le désembuage respectivement droite et gauche sont ménagées aux extrémités correspondantes de la face supérieure (28) de la poutre (1), et sont chacune d'une superficie comprise entre 0,05 et 0,2 fois la superficie cumulée des bouches (27,29) d'évacuation d'air pour le dégivrage et/ou la diffusion douce (29) et pour le désembuage (27).

18. Poutre selon la revendication 16, **caractérisée en ce que** des bouches (29) d'évacuation pour le dégivrage et/ou la diffusion douce sont ménagées en zone médiane de la face arrière (30) de la poutre (1), et sont d'une superficie comprise entre 0,8 et 0,95 fois la superficie cumulée des bouches (27,29) d'évacuation d'air pour le dégivrage et/ou la diffusion douce (29) et pour le désembuage (27).

19. Procédé d'assemblage d'une poutre avec des organes de distribution sélective d'air selon l'une quelconque des revendications 2 à 18, **caractérisé en ce qu**'il consiste à effectuer les étapes successives suivantes :
- ) solidariser l'un à l'autre les éléments constitutifs de la poutre (1), pour former le corps monobloc.
- ) Introduire le ou les organes de distribution sélective d'air (2,3) longitudinalement à l'intérieur de la poutre (1),à travers les fenêtres (8,9) d'extrémités respectives qui y sont ménagées.
- ) Fixer à la poutre (1), par vissage notamment, les organes de distribution sélective d'air (2,3).
- ) Introduire et fixer des répartiteurs (4,5) à l'intérieur de la poutre (1) à travers la bouche d'admission (21).

## Claims

1. Hollow beam (1) for reinforcing the cockpit of a vehicle, this beam (1) constituting a member through which air originating from a heating, ventilation and/or air conditioning system flows, and for this purpose comprising at least one air intake opening (21) and a plurality of outlet openings (23, 24, 26, 27, 29) for discharging the admitted air, and being made up of an integral body stretching longitudinally in a constant direction and which is equipped at its ends with tips (12, 13) for reinforcing the beam (1) and fixing it to the cockpit of the vehicle, **characterized in that** at its ends it comprises windows (8, 9) for the longitudinal introduction of members for the selective distribution of the air admitted into the beam (1).

2. Beam according to Claim 1, **characterized in that** the integral body is made up of at least two longitudinal elements secured to one another.

3. Beam according to Claim 2, **characterized in that** the elements that make up the body are secured to one another along at least 80% of their contact area.

4. Beam according to either one of Claims 2 and 3, **characterized in that** the elements that make up the body are secured by welding.

5. Beam according to any one of the preceding claims, **characterized in that** the members for the selective distribution of air are introduced into the beam through an overall air intake opening for air originating from the system.

6. Beam according to any one of the preceding claims, **characterized in that** the tips (12, 13) are organized as clamping collars.

7. Beam according to any one of the preceding claims, **characterized in that**, with the tips (12, 13) covering a region of the beam (1) comprising an opening (23, 24), these tips are provided with at least one window (19, 20) positioned facing this opening (23, 24) so as to allow air to pass.

8. Beam according to either one of Claims 6 and 7, **characterized in that** the tips (12, 13) are each made up of a pair of brackets (14, 15) connected to one another at their free edges.

9. Beam according to any one of the preceding claims, **characterized in that** the tips (12, 13) comprise a plate (16) to close off the ends of the beam (1), this plate being provided with centering members (17) for centering it on this beam (1) and with members (18) for fixing the tips (12, 13) to a bearing structure of the cockpit.

10. Beam according to any one of the preceding claims, **characterized in that** it is of polygonal cross section.

11. Beam according to any one of the preceding claims, **characterized in that** it is of a cross section that can vary along its length so as to form narrower regions (10, 11) for the passage of parts of the vehicle.

12. Beam according to any one of the preceding claims, **characterized in that** the air intake opening (21) is of a size that exhibits a surface area of between 1.2 dm² and 2.2 dm².

13. Beam according to any one of the preceding claims, **characterized in that** the air intake opening (21) is formed in a central region of the underside (22) of the beam (1).

14. Beam according to any one of the preceding claims; **characterized in that** the surface area of the air outlet openings (23, 24, 26), considered individually, is between 0.17 times and 0.25 times the surface area of the air intake opening (21).

15. Beam according to Claim 11, **characterized in that** the internal cross section of the beam (1) at the narrower regions (10, 11) is between 0.25 times and 0.7 times the surface area of the air intake opening.

16. Beam according to Claim 14, **characterized in that** the sum of the surface areas of the outlet openings (27, 29) for demisting and deicing is between 0.7 dm² and 1.6 dm².

17. Beam according to Claim 16, **characterized in that** outlet openings (27) for demisting the right and the left respectively are formed at the corresponding ends of the top surface (28) of the beam (1) and each have a surface area of between 0.05 and 0.2 times the combined surface area of the air outlet openings (27, 29) for deicing and/or gentle diffusion (29) and for demisting (27).

18. Beam according to Claim 16, **characterized in that** outlet openings (29) for deicing and/or gentle diffusion are formed in the central region of the rear face (30) of the beam (1) and have a surface area of between 0.8 and 0.95 times the combined surface area of the air outlet openings (27, 29) for deicing and/or gentle diffusion (29) and for demisting (27).

19. Method of assembling a beam with members for the selective distribution of air according to any one of Claims 2 to 18, **characterized in that** it consists in performing the following successive steps:
- securing the constituent elements of the beam (1) to one another to form the integral body.
- introducing the member or members (2, 3) for the selective distribution of air longitudinally into the beam (1), through the respective end windows (8, 9) formed therein.
- fixing the members (2, 3) for the selective distribution of air to the beam (1), particularly by screwing.
- introducing and fixing splitters (4, 5) inside the beam (1) through the intake opening (21).

## Patentansprüche

1. Verstärkungshohlbalken (1) der Fahrzeugfahrgastzelle, wobei dieser Balken (1) ein Organ bildet, durch, welches Luft fließt, die von einer Heiz-, Belüftungs- und/oder Klimaanlage kommt, und der dazu mindestens eine Lufteinlassöffnung (21) und mehrere Auslassöffnungen (23, 24, 26, 27, 29) der eingelassenen Luft aufweist und aus einem einteiligen, sich längs entlang einer konstanten Richtung erstreckenden Körper besteht und an seinen Enden mit Verstärkungs- und Befestigungsansätzen (12, 13) des Balkens (1) an der Fahrgastzelle des Fahrzeugs ausgestattet ist, **dadurch gekennzeichnet, dass** er an seinen Enden Fenster (8, 9) zum Längseinfügen von Organen zum selektiven Verteilen der in das Innere des Balkens (1) eingelassenen Luft aufweist.

2. Balken nach Anspruch 1, **dadurch gekennzeichnet, dass** der einteilige Körper aus mindestens zwei miteinander fest verbundenen Längselementen besteht.

3. Balken nach Anspruch 2, **dadurch gekennzeichnet, dass** die den Körper bildenden Elemente fest miteinander entlang mindestens 80 % ihrer Kontaktfläche verbunden sind.

4. Balken nach einem der Ansprüche 2 und 3, **dadurch gekennzeichnet, dass** die den Körper bildenden Elemente durch Schweißen verbunden sind.

5. Balken nach einem der vorhergehenden Ansprüche, **dadurch gekennzeichnet, dass** Organe zum selektiven Verteilen von Luft in das Innere des Balkens durch eine globale Einlassöffnung von Luft, die von der Anlage kommt, eingeführt sind.

6. Balken nach einem der vorhergehenden Ansprüche, **dadurch gekennzeichnet, dass** die Ansätze (12, 13) als Spannschellen ausgebildet sind.

7. Balken nach einem der vorhergehenden Ansprüche, **dadurch gekennzeichnet, dass** die Ansätze (12, 13) eine Zone des Balkens (1), die eine Öffnung (23, 24) aufweist, abdecken, wobei diese mit mindestens einem Fenster (19, 20) versehen sind, das gegenüber dieser Öffnung (23, 24) angeordnet ist, um das Durchgehen der Luft zu gestatten.

8. Balken nach einem der Ansprüche 6 und 7, **dadurch gekennzeichnet, dass** die Ansätze (12, 13) jeweils aus einem Paar Winkelelementen (14, 15) bestehen, die an ihren freien Rändern miteinander verbunden sind.

9. Balken nach einem der vorhergehenden Ansprüche, **dadurch gekennzeichnet, dass** die Ansätze (12, 13) eine Platte (16) zum Schließen der Enden des Balkens (1) aufweisen, die mit Zentrierorganen (17) auf diesem Letzteren (1) und mit Organen (18) zum Befestigen der Ansätze (12, 13) auf einem Tragaufbau der Fahrgastzelle versehen ist.

10. Balken nach einem der vorhergehenden Ansprüche, **dadurch gekennzeichnet, dass** er einen Vieleckquerschnitt hat.

11. Balken nach einem der vorhergehenden Ansprüche, **dadurch gekennzeichnet, dass** sein Querschnitt entlang seiner Länge variabel ist, um Einschnürungen (10, 11) für das Durchgehen von Organen des Fahrzeugs einzurichten.

12. Balken nach einem der vorhergehenden Ansprüche, **dadurch gekennzeichnet, dass** die Lufteinlassöffnung (21) ein Maß aufweist, das eine Fläche zwischen 1,2 dm² und 2,2 dm² hat.

13. Balken nach einem der vorhergehenden Ansprüche, **dadurch gekennzeichnet, dass** die Lufteinlassöffnung (21) in der mittleren Zone der Unterseite (22) des Balkens (1) eingerichtet ist.

14. Balken nach einem der vorhergehenden Ansprüche, **dadurch gekennzeichnet, dass** die Fläche der Luftauslassöffnungen (23, 24, 26) einzeln genommen zwischen 0,17 Mal und 0,25 Mal die Fläche der Lufteinlassöffnung (21) beträgt.

15. Balken nach Anspruch 11, **dadurch gekennzeichnet, dass** der Innenquerschnitt des Balkens (1) im rechten Winkel zu den Einschnürungen (10, 11) zwischen 0,25 Mal und 0,7 Mal die Fläche der Lufteinlassöffnung beträgt.

16. Balken nach Anspruch 14, **dadurch gekennzeichnet, dass** die Summe der Flächen der Auslassöffnungen (27, 29) für das Kondensationseliminieren und Entfrosten zwischen 0,7 dm² und 1,6 dm² beträgt.

17. Balken nach Anspruch 16, **dadurch gekennzeichnet, dass** die Auslassöffnungen (27) für das Kondensatableiten jeweils rechts und links an den entsprechenden Enden der Oberseite (28) des Balkens (1) eingerichtet sind und jeweils eine Fläche zwischen 0,05 und 0,2 Mal die summierte Fläche der Luftauslassöffnungen (27, 29) zum Entfrosten und/oder sanften Verteilen (29) und Kondensatableiten (27) haben.

18. Balken nach Anspruch 16, **dadurch gekennzeichnet, dass** die Auslassöffnungen (29) für das Entfrosten und/oder das sanfte Verteilen in der mittleren Zone der Rückseite (30) des Balkens (1) eingerichtet sind und eine Fläche zwischen 0,8 und 0,95 Mal die summierte Fläche der Luftauslassöffnungen (27, 29) für das Entfrosten und/oder das sanfte Verteilen (29) und für das Kondensatableiten (27) haben.

19. Verfahren zum Zusammenbauen eines Balkens mit Organen zum selektiven Verteilen von Luft nach einem der Ansprüche 2 bis 18, **dadurch gekennzeichnet, dass** es darin besteht, die folgenden aufeinander folgenden Schritte auszuführen:
- festes Verbinden miteinander der Bestandteile des Balkens (1), um den einteiligen Körper zu bilden;
- Einführen des oder der Organe (2, 3) zum selektiven Verteilen von Luft längs im Inneren des Balkens (1) durch die Endfenster (8, 9), die dort angeordnet sind;
- Befestigen am Balken (1), insbesondere durch Schrauben, der Organe (2, 3) zum selektiven Verteilen von Luft;
- Einfügen und Befestigen der Verteiler (4, 5) im Inneren des Balkens (1) durch die Einlassöffnung (21).
